Europäisches Patentamt

European Patent Office

Office européen des brevets

(19)

(11) Veröffentlichungsnummer: **0 271 811**
**B1**

# (12) EUROPÄISCHE PATENTSCHRIFT

(45) Veröffentlichungstag der Patentschrift: **30.01.91**

(51) Int. Cl.⁵: **F 02 M 35/10**

(21) Anmeldenummer: **87118188.9**

(22) Anmeldetag: **08.12.87**

(54) Ansauganlage für Brennkraftmaschinen.

(30) Priorität: **18.12.86 DE 3643196**

(43) Veröffentlichungstag der Anmeldung:
**22.06.88 Patentblatt 88/25**

(45) Bekanntmachung des Hinweises auf die
Patenterteilung:
**30.01.91 Patentblatt 91/05**

(84) Benannte Vertragsstaaten:
**DE ES FR GB IT SE**

(56) Entgegenhaltungen:
**DE-A-1 933 271     US-A-2 525 198**
**DE-A-2 339 356     US-A-4 078 471**
**DE-A-3 424 639     US-A-4 117 823**
**DE-C- 823 492**

**PATENT ABSTRACTS OF JAPAN, Band 10, Nr.
176 (M-491)2232r, 20. Juni 1986; & JP-A-61 25
963 (MAZDA MOTOR CORP.) 05-02-1986
DE-Zeitschrift MTZ, Motortechniche Zeitschrift
38 (1977) 10, Seite 482; Werkstatthandbuch 097
7500-1800, Feld 39 für Audi 100/Avant Modell
82(c), Ausgabe 1-1985.**

(73) Patentinhaber: **Bayerische Motoren Werke
Aktiengesellschaft
Patentabteilung AJ-30 Postfach 40 02 40
Petuelring 130
D-8000 München 40 (DE)**

(72) Erfinder: **Bender, Karl-Heinz
Ringstrasse 75
D-8042 Oberschleissheim (DE)**
Erfinder: **Rother, Hubert
Riesenfeldstrasse 104
D-8000 München 40 (DE)**

(74) Vertreter: **Bücken, Helmut
Bayerische Motoren Werke Aktiengesellschaft
Postfach 40 02 40 Petuelring 130 - AJ-30
D-8000 München 40 (DE)**

# Beschreibung

Die Erfindung betrifft eine Ansauganlage für Brennkraftmaschinen gemäß der im Oberbegriff des Patentanspruches 1 beschriebenen Bauart.

Die JP—A—61—25963 zeigt für einen V-Motor eine Ansauganlage mit einem Sammler und — in Stirnansicht gesehen — gekreuzt angeordneten Saugrohren. Jedes der Saugrohre umfaßt einen maschinenseitigen und einen sammlerseitigen Abschnitt, wobei die Saugrohr-Abschnitte miteinander in lösbarer, abgedichteter Verbindung stehen. Weiter stehen die maschinenseitigen Saugrohr-Abschnitte mit der Maschine und die sammlerseitigen Saugrohr-Abschnitte mit dem Sammler in lösbarer, abgedichteter Verbindung.

Um bei einer mehrzylindrigen Brennkraftmaschine die damit verbundene große Anzahl abgedichteter Einzel-Verbindungen zu reduzieren, sind die sammlerseitigen Saugrohr-Abschnitte über gemeinsame Anschlußflansche jeweils als ein Gußstück gestaltet, weiter sind die maschinenseitigen Saugrohr-Abschnitte zu einem Gußstück zusammengefaßt. An diesem Gußstück sind Stützen angeformt zur Abstützung des aus einem Gußstück gebildeten Sammlers, der über Spannschrauben lösbar angeordnet ist. Zwar bilden der Sammler und das Gußstück der maschinenseitigen Saugrohr-Abschnitte damit einen steifen Verband, jedoch erfordert dies für eine fluchtende Anordnung der sammlerseitigen Saugrohr-Abschnitte an ihren beiden Anschlußenden eine hohe Maßhaltigkeit in engen Toleranzen für sämtliche Einzelgußstücke der Ansauganlage.

Durch die mangelnde Höheneinstellbarkeit des Sammlers relativ zum Gußstück der maschinenseitigen Saugrohr-Abschnitte müssen die sich unvermeidlich in der Fertigung der separaten Gußstücke der Ansauganlage ergebenden maßlichen Abweichungen (Toleranzen) bei der Montage der Gußstücke der sammlerseitigen Saugrohr-Abschnitte über die in den abgedichteten Verbindungen vorgesehenen Dichtungen ausgeglichen werden. Die mangelnde Höheneinstellbarkeit, die für einwandfreie Verbindungen der Saugrohr-Abschnitte miteinander und von Saugrohr-Abschnitten mit dem Sammler erforderlich ist, führt somit beim Toleranzausgleich über die Dichtungen zu hohen mechanischen Kräften in den lösbaren Verbindungen mit dem Nachteil einer in sich verspannten Ansauganlage, deren Dichtstellen in den lösbaren Verbindungen zumindest zu Undichtigkeiten neigen.

Der Erfindung liegt die Aufgabe zugrunde, eine Ansauganlage nach dem Oberbegriff des Patentanspruches 1 derart weiterzubilden, daß die bei einer Montage mittels Abstützung bewirkte Lagefixierung des einen Teiles der Ansauganlage auf die lösbaren Verbindungen der jeweiligen Saugrohr-Abschnitte miteinander im wesentlichen rückwirkungsfrei bleibt und damit zu Undichtigkeiten führende Spannungen in den Saugrohr-Abschnittsverbindungen weitestgehend vermieden sind.

Diese Aufgabe wird gemäß dem Kennzeichen des Patentanspruches 1 gelöst durch die Anordnung einer an sich bekannten, in axialer Richtung geschlitzten und über Spreizkegel in Kombination mit der Spannschraube aufweitbaren Klemmhülse, die als Stütze in einer Ausnehmung am sammlerseitigen Saugrohr-Abschnitt oder am Sammler angeordnet ist, und die miteinander in abgedichteter Verbindung stehenden Saugrohr-Abschnitte gegenseitig höheneinstellfrei fixiert.

Eine derartige Klemm-Hülse dient beispielsweise beim Gegenstand der gattungsfremden DE—PS 823 492 zur kraft-/ reibschlüssigen Verbindung zweier gesonderter Gegenstände. Dieses Prinzip gilt auch für die aus der US—A—2,525,198 bekannte Bolzen-Verankerung. Weiter kommt dieses Prinzip bei der Fixierung eines Fahrradlenkers in der jeweiligen Höhenanordnung zur Anwendung. Schließlich ist die Verwendung einer derartigen Klemm-Hülse für eine Klemmverbindung bei Brennkraftmaschinen aus dem Werkstatthandbuch 097.7500-1800, Feld 39 für Audi 100/ Avant Modell 82 (C), Ausgabe 1-1985 bekannt, wobei diese Klemm-Verbindung zwischen einem motorfesten Halter und einer einspritzpumpenseitigen Stützplatte als in einem Langloch geführtes Spreizelement zur endgültigen gegenseitigen Festlegung der Schwenklage der Stützplatte dient.

Demgegenüber dient die an sich behannte Klemm-Hülse erfindungsgemaß der gegenseitigen Fixierung zweier in sich steifer, jedoch in gewissem Umfang nachgiebig miteinander verbundener Teile einer Ansauganlage. Bei einer Ansauganlage mit beispielsweise U- oder V-förmigen, im Scheitelbereich getrennt ausgebildeten und gesondert unter Zwischenschaltung von Dichtungen verbundenen Saugrohren werden deren Abschnitte in der aus der gesonderten Verbindung resultierenden gegenseitigen Lage vorteilhaft rückwirkungs- bzw. spannungsfrei fixiert. Damit entfällt eine zusätzliche und bei jeder Ansauganlage individuell durchzuführende, auf die Saugrohr-Abschnittsverbindungen ggf. rückwirkungsbehaftete Höhenlagenbestimmung des Sammlers bzw. des sammlerseitigen Saugrohr-Abschnittes gegenüber dem maschinenseitigen Abschnitt des zugehörigen Saugrohres der Ansauganlage.

Die erfindungsgemäß höheneinstellfreie Fixierung in der durch die Montage gegebenen gegenseitigen Lage der Teile der Ansauganlage kann bei einer von der Brennkraftmaschine entfernt vormontierbaren Ansauganlage erzielt werden, wobei der den Sammler frei tragende Teil der Ansauganlage gegen die an der Maschine festlegbaren Saugrohr-Abschnitte abgestützt ist. Hierbei ist mit der erfindungsgemäßen Abstützung über die Klemmverbindung ein Auseinanderrücken oder Zusammenziehen der einander gegenüberliegenden Teile der Ansauganlage in vorteilhafter Weise vermieden, wodurch die lösbaren Verbindungen zwischen den einzelnen Saugrohr-Abschnitten aus der gegenseitigen Abstützung belastungs- bzw. spannungsfrei bleiben.

In Ausgestaltung der Erfindung beschreibt Anspruch 2 für die Abstützung eine gesonderte Stütze.

Die Erfindung ist anhand eines in der Zeichnung dargestellten Ausführungsbeispieles beschrieben.

Es zeigen:

Fig. 1 eine an einer Brennkraftmaschine angeordnete und erfindungsgemäß abgestützte Ansauganlage,

Fig. 2 eine bevorzugte Ausgestaltung der Stütze im Detail.

Eine Ansauganlage 1 für eine nicht näher dargestellte Reihenbrennkraftmaschine 2 weist zwischen einem Sammler 3 und jedem Ansaugkanal 4 der Brennkraftmasche 2 ein Saugrohr 5 auf. Jedes der einzelnen Saugrohre 5 weist einen an der Brennkraftmaschine 2 mittels eines Flansches 6 festlegbaren Abschnitt 7 auf sowie jeweils einen mit dem Sammler 3 verbundenen Abschnitt 8. Die im wesentlichen zueinander entgegengesetzt gerichteten Saugrohr-Abschnitte 7 und 8 des in etwa U-förmig verlaufenden Saugrohres 5 sind in miteinander fluchtenden Bereichen bei 9 lösbar verbunden.

Zur mechanischen Entlastung der bei 9 vorgesehenen lösbaren Verbindung zwischen den einzelnen Saugrohr-Abschnitten 7 und 8 und ferner zur Gewährleistung einer betriebssicheren Abdichtung in dieser lösbaren Verbindung ist zwischen dem Sammler 3 und dem maschinenseitigen Abschnitt 7 des Saugrohres 5 eine gesonderte Stütze 10 angeordnet. Mittels der zumindest einseitig lösbar ausgebildeten Stütze 10 sind freie Schwingungen des den Sammler 3 und die sammlerseitigen Saugrohr-Abschnitte 8 umfassenden Teiles der Ansauganlage 1 unterbunden.

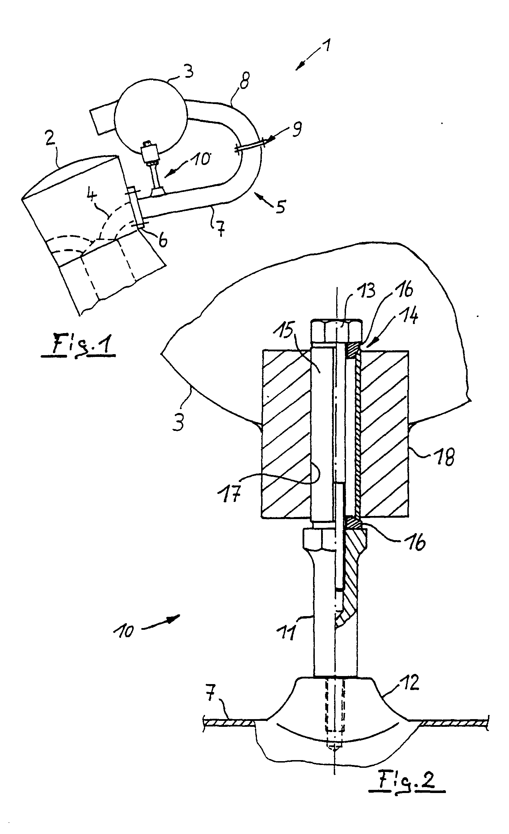

Nach Fig. 2 ist die Stütze 10 als ein Einschraubbolzen 11 ausgebildet, der in einen am maschinenseitigen Saugrohr-Abschnitt 7 angeformten Butzen 12 eingeschraubt ist. Sammlerseitig wirkt der Einschraubbolzen 11 mit einer Spannschraube 13 einer Sprelzvorrichtung 14 zusammen. Die Sprelzvorrichtung 14 umfaßt eine zur Spannschraube 13 konzentrisch angeordnete und in axialer Richtung geschlitzte Hülse 15 sowie an beiden Enden der Hülse 15 zur radialen Aufweitung einwirkende Spreizkegel 16. Über die mit der Spannschraube 13 bewirkbare radiale Aufweitung wird die Hülse 15 mit der Wandung einer Ausnehmung 17 in einem Auge 18 am Sammler 3 in eine kraft-/reibschlüssige Verbindung gebracht. Mit der an der Stütze 10 angeordneten, einstellbar ausgebildeten Sprelzvorrichtung 14 ist eine höheneinstellfreie Klemmverbindung geschaffen.

Die von der Brennkraftmaschine 2 gesonderte Stütze 10 zur gegenseitigen Abstützung von Teilen der Ansauganlage 1 kann anstelle des Einschraubbolzens 11 auch einen am jeweiligen maschinenseitigen Saugrohr-Abschnitt 7 angeformten Guß-Fortsatz aufweisen (nicht dargestellt), an dem eine Sprelzvorrichtung 14 anordbar ist. Die Sprelzvorrichtung 14 ermöglicht sowohl bei einer von der Brennkraftmaschine 2 entfernt durchgeführten Komplettmontage der Ansauganlage als auch bei deren endgültiger Komplettierung an der Brennkraftmaschine 2 nach Montage von Hilfseinrichtungen an den maschinenseitigen Saugrohr-Abschnitten 7 durch die höheneinstellfreie Klemmverbindung eine lösbare Verbindung der Saugrohr-Abschnitte 7 und 8 mit einwandfreier Abdichtung.

**Patentansprüche**

1. Ansauganlage für Brennkraftmaschinen mit einem Saugrohr (5) zwischen einem Ansaugkanal (4) der Maschine (2) und einem dem Maschinenkopf benachbart angeordneten Sammler (3),

wobei das Saugrohr zueinander verschieden gerichtete Abschnitte mit einem an der Maschine festlegbaren Abschnitt (7) und einen mit dem Sammler (3) verbundenen Abschnitt (8) aufweist,

wobei die Saugrohr-Abschnitte (7, 8) miteinander in lösbarer, abgedichteter Verbindung stehen, und

wobei der Sammler (3) gegen den maschinenseitigen Saugrohr-Abschnitt (7) abgestützt und mittels einer Spannschraube (13) lösbar verbunden ist,

gekennzeichnet durch die Anordnung einer an sich bekannten, in axialer Richtung geschlitzten und über Spreizkegel (16) in Kombination mit der Spannschraube (13) aufweitbaren Klemm-Hülse (15), die als Stütze in einer Ausnehmung (17) am sammlerseitigen Saugrohr-Abschnitt (8) oder am Sammler (3) angeordnet ist, und die miteinander in abgedichteter Verbindung stehenden Saugrohr-Abschnitte (7, 8) gegenseitig höheneinstellfrei fixiert.

2. Ansauganlage nach Anspruch 1, dadurch gekennzeichnet, daß die Spannschraube (13) in einen am maschinenseitigen Saugrohr-Abschnitt (7) festschraubbaren Einschraubbolzen (11) mit Einschraubgewinde eingeschraubt ist.

**Revendications**

1. Installation d'aspiration pour moteurs à combustion interne avec un tuyau d'aspiration (5) entre un canal d'aspiration (4) du moteur et un collecteur (3) disposé à proximité de la tête du moteur, le tube d'aspiration comprenant des tronçons différemment orientés l'un par rapport à l'autre, avec un tronçon (7) pouvant être fixé sur le moteur et un tronçon (8) lié au collecteur (3), les tronçons du tuyau d'aspiration (7, 8) étant eux-mêmes reliés l'un à l'autre de façon amovible et étanche, et le collecteur (3) étant étayé contre le tronçon (7) du tuyau d'aspiration côté moteur et étant relié à celui ci de façon amovible au moyen d'une vis de serrage, caractérisé en ce qu'est prévue la mise en oeuvre d'une douille de serrage (14), connue en soi, fendue dans le sens axial et pouvant s'élargir par l'intermédiaire de cônes d'élargissement (16) en combinaison avec la vis de serrage (13), douille qui est placée comme support dans un évidement (17) sur le tronçon (8) du tuyau d'aspiration côté collecteur, ou sur le collecteur (3), et qui assure la fixation réciproque sans réglage en hauteur des tronçons (7, 8) de tuyau d'aspiration reliés de façon étanche l'un à l'autre.

2. Installation d'aspiration selon la revendication 1, caractérisée en ce que la vis de serrage (13) est vissée par filetage dans un boulon (11) fileté, vissé solidement sur le tronçon (7) du tuyau d'aspiration du côté moteur.

**Claims**

1. An intake system for internal-combustion engines, having a suction pipe (5) between an intake passage (4) of tbe engine (2) and a collector (3) arranged adjacent to the engine head, wherein the suction pipe comprises sections directed differently from one another with a section (7) fixable on the engine and a section (8) connected with the collector (3), while the suction pipe sections (7, 8) are in releasable, sealed connection with one another, and the collector (3) is supported against the suction pipe section (7) on the engine and is detachably connected by means of a clamp bolt (13), characterised by the arrangement of a clamping sleeve (15) known per se which is slotted in the axial direction and can be opened out by means of expanding cones (16) in combination with the clamp bolt (13), which sleeve is arranged as a support in an aperture (17) on the collector suction pipe section (8) or on the collector (3) and fixes the suction pipe sections (7, 8), which are in sealed connection with one another, freely for mutual vertical adjustment.

2. An intake system according to Claim 1 characterised in that the clamp bolt (13) is screwed into a screw-in threaded screw-in bolt (11) which can be screwed fast on the machine suction pipe section (7).

4

EP 0 271 811 B1

Fig.1

Fig.2

1